Europäisches Patentamt

European Patent Office

Office européen des brevets

(19)

(11) Publication number: **0 011 661**
**B1**

(12) **EUROPEAN PATENT SPECIFICATION**

(45) Date of publication of patent specification: **18.05.83**

(51) Int. Cl.³: **C 08 J 11/00**

(21) Application number: **78300692.7**

(22) Date of filing: **29.11.78**

(54) A recycling process for flexible polyurethane foams.

(43) Date of publication of application:
**11.06.80 Bulletin 80/12**

(45) Publication of the grant of the patent:
**18.05.83 Bulletin 83/20**

(84) Designated Contracting States:
**BE DE FR GB NL**

(56) References cited:
**US - A - 3 404 103**
**US - A - 3 632 530**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn MI 48121 (US)**
(84) **BE NL**

(72) Inventor: **Braslaw Jacob**
**21223 Harward Road**
**Southfield Michigan 48076 (US)**
Inventor: **Pai Purnachandra**
**18316 Westhampton**
**Southfield Michigan 48075 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

A recycling process for flexible polyurethane foams

This invention relates to methods for treating polyurethane.

Considerable effort has been heretofore directed to the development of recovery methods for polyurethane scrap materials, particularly polyurethane foams including flexible, rigid and semi flexible foams. One approach in recovering useful materials from flexible foam utilizes low molecular weight aliphatic diols to effect thermal decomposition of the foam for subsequent processing. (See, for example, U.S. Patents 3,983,087; 3,738,946; 3,632,530; 3,300,417, and 2,937,151).

In treating flexible foam by thermal decomposition with low molecular weight diol, a separation over a period of time of the decomposition product obtained into two liquid layers has not been an altogether satisfactory consequence. U.S. Patent 3,738,946 describes such consequence and shows mitigation of its effect by preparing rigid foams from balanced proportions of the resultant layers. U.S. Patent 3,983,087 alternatively uses particular amounts of certain alkyl substituted low molecular weight diols to provide a single phase decomposition product that is said to be suitable for preparation of certain polyurethane products. U.S. Patent 3,632,530 provides for separating the layers obtained from certain flexible foams by rather extreme reaction conditions and cooling of the dissolution product before further purification.

Each of the approaches in the above-identified patents while evidencing merit, does have certain drawbacks. For example, the type of alkyl substituted glycol utilized in U.S. 3,983,087 may be even more expensive than the polyol originally used in making the flexible foam. Moreover, the process of U.S. 3,738,946 apparently is not seen to be applicable to recycling scrap flexible foam back into products suitable for preparation of new flexible foam. Still further, the process of U.S. 3,632,530 appears to require extended periods for completion.

According to the present invention there is provided a method for treating polyurethane which comprises dissolving the polyurethane in a low molecular weight diol at a temperature up to 210°C; characterised in that during dissolution or thereafter a liquid polyol which has a number average molecular weight of at least 1000 and which is suitable for use in preparation of flexible polyurethane foam is admixed with the polyurethane, and at least part of the low molecular weight diol is removed under vacuum from the liquid admixture obtained at a temperature exceeding 100°C, to leave a liquid polyol residue.

The invention is particularly useful in the treatment of flexible polyurethane foams.

The method of this invention provides not only a rapid procedure for recovery of desirable liquid polyol product from the flexible foam, but, furthermore a polyol product that is suitable for use in the preparation of new flexible polyurethane by reaction with a polyisocyanate. Rather than proceeding with conditions that necessitate formation of separate liquid layers after heating the flexible foam in the presence the low molecular weight diol, the method herein allows formation and use of a single phase dissolution product. Moreover, economic use of readily available diol is achieved.

The preferred method of this invention utilizes low molecular weight aliphatic diols, especially alkylene glycols such as diethylene glycol to thermally dissolve flexible polyurethane foam at temperatures up to 210°C during periods normally ranging up to about 3 hours. After addition of high molecular weight polyol to the so obtained or obtainable dissolution product, remaining glycol solvent is vacuum distilled (at temperatures preferably below about 170°C to prevent degradation) to leave a polyol residue that can be reprocessed into new flexible foam with advantageous properties including tear strength. The distilled glycols may be reprocessed to provide further economic advantage.

Typical polyurethane flexible foams applicable herein are polymeric reaction products containing urea type and urethane type linkages and are made by reaction of a mixture containing polyisocyanate and high molecular weight (i.e. number average of at least 1000) ether or urea polyol.

Polyisocyanates often utilized in making flexible polyurethane foam and especially found suitable for the method herein include aromatic polyisocyanates, particularly those diisocyanates comprising arylene or alkarylene moieties e.g. 2,4-tolylene, 2,6-tolylene and 4,4'-diphenylenemethane as are well known for their use in preparing flexible foam.

The high molecular weight ether or urea polyol typically used in making flexible foam has a molecular weight (number average) of up to 10,000 as, for example, from about 2000 to about 9000 and the recovery method herein is advantageously applicable to flexible foam made with ether polyols such as polyether triols having a number average molecular weight of from about 4000 to about 7500. Moreover, combinations of polyols of varying molecular weights within these ranges are also often used in making flexible polyurethane foams.

Other ingredients often used in preparation of flexible foam that is suitably recovered according to this invention include catalyst, surfactant, water, fillers and other modifiers including amines in minor amounts.

Besides flexible foam, the method herein can utilise other polyurethane materials, e.g., semi- flexible and rigid foams during the dissolution stage as such other polyurethanes can undergo decomposition at these conditions. Recovery of fixed amounts of well characterised flexible foam scrap, however, provides for ease in process control.

The low molecular weight aliphatic diol used in the dissolution of the flexible foam preferably comprises one or more aliphatic diols having up to 6 carbon atoms and of the formula HO—A—OH wherein A is an alkylene that is preferably interrupted by oxy (—O—) groups. Gycols that distill below about 170° at below about 13.33 m bar (10 mm. of Hg), are preferred, e.g. and diethylene glycol (i.e., 2,2'-dihydroxydiethyl ether). The latter currently constitutes a particularly preferred glycol in view of its relative cost, availabililty and performance.

The amount of low molecular weight aliphatic diol used in dissolution of the flexible foam is not a critical aspect, providing that a viscosity of the dissolution product is maintained that is convenient for processing. In this regard admixture with high molecular weight polyol used to make the original foam may aid in attaining desired viscosity of the dissolution product. Preferably, the weight ratio of the flexible foam to the low molecular weight diol is from 2:1 and to 1:2 with a ratio of above 1:1 advantageously providing desirable utilization of diol.

In one preferred embodiment the low molecular weight diol is heated to a temperature of up to 210°C, preferably of from about 180°C to about 200°C, whereupon the foam is added in small pieces with continuous stirring. Addition of the pieces over a period of time is advantageous. Equal weights of the preferred low molecular weight diol and the foam are able to be dissolved in about one hour and twice as much foam taking about two hours. It appears that catalyst used in making the foam promotes the dissolution as the dissolution rate increases with further addition of foam up until viscosity of the dissolution product inhibits adequate mixing.

The conditions under which dissolution is carried out in accordance with this invention are desirably mild and permit attainment of a liquid product which is thereafter preferably admixed with a high molecular weight polyol that is suitable for use in the preparation of flexible foams, preferably the same type of polyol that is used as a starting material in making the flexible foam that is being recovered. For example, if the flexible urethane foam is made with a polyether triol it is desired to use a polyether polyol, especially the same polyether triol, for admixture with the liquid dissolution product. Thus, one may simply look to the high molecular weight polyol that is used in preparation of any given foam for examples of the type of high molecular weight polyol suitable for the method herein.

The subsequent addition of high molecular weight polyol has an advantage of reducing viscosity of the dissolution product but earlier addition may also be possibly of advantage in aiding dissolution and reducing viscosity of the dissolution mixture if desired.

Since the conditions under which the flexible foam are dissolved in low molecular weight diol, and, optionally high molecular weight polyol that is suitable for use in preparation of new foam are mild as compared to the prior art procedures, this perhaps accounts in part for the fact that a single or substantially single liquid layer is obtainable during such dissolution. Moreover, attainment of this apparently single or substantially single liquid layer which is relatively stable, e.g. remains unseparated for 2 hours or more evidences that preferred reaction conditions are being employed.

The amount of high molecular weight polyol employed relative to the low molecular weight diol and flexible foam combined may vary widely but are desirably used in amounts that permit adequate viscosity of the admixture for pumping, e.g. from about 1:20 to about 10:1 weight ratio of the flexible foam and low molecular weight diol to the high molecular weight polyol. Use of a weight ratio of the added high molecular weight polyol to diol of from about 20:1 to about 3:1 is normally sufficient. The weight ratio of the high molecular weight polyol to the polyurethane is preferably from 10:1 to 1:1. Optimum ratios will in part depend upon the amount of scrap flexible foam to be recycled relative to the new foam that is being produced.

Low molecular weight diol is removed from the liquid dissolution product comprising the added high molecular weight polyol by heating (preferably at a temperature up to about 180°C) under vacuum, preferably below 13.33 mbar (10 mm Hg) and more desirably below 1.33 mbar (1 mm. Hg) to obtain a recovery product that can be used in preparation of flexible polyurethanes, especially foams. The low molecular weight diol removed may be reprocessed for use again in continuous operations.

Desirably, a major portion of the original amount of the low molecular weight diol added is removed, preferably at least about 70% by weight of the original amount used during dissolution, more preferably at least about 90% by weight.

The following examples illustrate this invention and are not intended limiting it to their specific details. All parts are parts by weight and all temperatures are in degrees Centigrade unless specially noted otherwise.

Example 1

(a) A flexible polyurethane foam is made from the ingredients of Table I below by rapid mixing of ingredients 1—8 with ingredient 9 (polyisocyanates) for about 15 seconds and pouring the foaming product into a mould whereby a light cream coloured flexible urethane foam of 0.034 specific gravity is obtained after a cure of 5—10 minutes at 120°C.

## TABLE I
### Formulation of flexible polyurethane foam

| Material—source | Parts | Description |
|---|---|---|
| 1. Pluracol* 535 (Polyol) (BASF) | 75 | 1640 eq. wt. mostly triol |
| 2. Pluracol* 581 (Polyol) (BASF) | 25 | 2078 eg. wt. mostly triol; contains styrene and acrylonitrile |
| 3. Water | 2.8 | Distilled |
| 4. Amine (Air Prod.) | 0.14 | Triethylene diamine |
| 5. Amine (Air Prod.) | 0.20 | Dimethylaminoethyl-morpholine |
| 6. Glycol (Union Carbide) | 0.10 | 70% bis (2-Dimethyl-aminoethyl) ether, 30% dipropylene glycol |
| 7. Surfactant (Dow Corning) | 1.4 | Silicone glycol co-polymer |
| 8. Catalyst (M & T) | 0.015 | Dibutyl Tin Dilaurate |
| 9. Polyisocyanate (Mobay) | 35.78 | Polymeric Isocyanates, 20% MDI, 80% TDI |

\* PLURACOL is a trade mark.

(b) Equal amounts by weight of a virgin flexible foam prepared as in (a) and diethylene glycol (2,2'-dihydroxydiethyl ether) are admixed according to the following procedure. The diethylene glycol is preheated to 180°. Small pieces of foam weighting about 0.01 parts are added slowly with agitation until dissolution occurs whereupon additional pieces are added while the mixture is maintained between 180—200°C. The total time elapsed for complete dissolution is 40 minutes. The mixture is maintained for an additional one hour and then the heating and stirring is stopped. The end product is dark brown in colour with a small amount of solid residue in the bottom. Negligible weight loss is found to occur during dissolution.

(c) To three mixtures each of 100 parts of a liquid mixture of ingredients 1—8 of Table I are mixed, respectively, five, ten and twenty-five parts of the resinous liquid obtained in (b) above. Flexible low density foams are obtained when 100 parts of the so combined mixture is foamed with 34 parts of the polyisocyanate in Table I.

(d) Fifty parts of the liquid phase obtained in (b) are mixed with 150 parts of Pluracol 535. The mixture is passed through a rotating film evaporator maintained at a pressure of 0.93 mbar (0.7 mm. Hg) and a temperature of 130°C. Collection of the vapours yields twenty-four parts of a light yellow liquid that is identified by infrared analysis to contain essentially diethylene glycol. The non-evaporated resinous liquid remaining weighs 175 parts. A single liquid phase remains after allowing this liquid to stand for over 72 hours.

(e) Flexible foam is prepared in accordance with the foaming procedure above in (a) using the formulation of Table I except that the 25 parts of Pluracol 535 is replaced with the above obtained resinous liquid of (d) at equal parts by weight. The resultant flexible foam is a material with greater tear strength than the foams obtained from using the dissolution product described above in (c) that does not utilize subsequent distillation of glycol.

Example 2

The procedures of Example 1 are followed except that similar size pieces of 200 parts of the same virgin flexible foam are added to 100 parts of the diethylene glycol over a period of 80 minutes. Fifty parts of the resultant liquid are added to one hundred fifty parts of Pluracol 535. Distillation under the conditions of Example 1 (d) provides vapours weighing 12.5 parts with 186 parts recovered as the liquid residue. The foam achieved using this liquid residue is similar in characteristics as that of the foam similarly prepared in Example 1 and of greater tear strength than foam prepared without distillation of the glycol in 1 (c).

Example 3

The procedure of Example 1 is repeated except that the additional one hour heating and stirring in step (b) is omitted. Essentially similar results are obtained.

## Claims

1. A method for thermally treating polyurethane to recover liquid polyol provided therefrom which comprises dissolving the polyurethane in a low molecular weight diol at a temperature up to 210°C; characterised in that during dissolution or thereafter a liquid polyol which has a number average molecular weight of at least 1000 and which is suitable for use in preparation of flexible polyurethane foam is admixed with the polyurethane and at least part of the low molecular weight diol is removed under vacuum from the liquid admixture at a temperature exceeding 100°C to leave a liquid polyol residue.

2. A method in accordance with Claim 1, characterised in that the high molecular weight liquid polyol comprises a polyether triol.

3. A method in accordance with Claim 1 or Claim 2, characterised in that the weight ratio of the said diol to the polyurethane is from 1:1 to 1:2.

4. A method in accordance with any one of Claims 1 to 3 characterised in that the weight ratio of the high molecular weight liquid polyol to the polyurethane is from 10:1 to 1:1.

5. A method according to any one of Claims 1 to 4 wherein at least 70% by weight of the diol is removed from the liquid admixture.

6. A method in accordance with any one of Claims 1 to 5 characterised in that the molecules of the diol comprise an oxy-interrupted alkylene chain of up to 6 carbon atoms.

7. A method in accordance with Claim 6 characterised in that the diol comprises diethylene glycol, or dipropylene glycol.

8. A method according to any one of Claims 1 to 7 characterised in that the weight ratio of the product obtained by dissolving the polyurethane in the diol and the high molecular weight liquid polyol is from 1:20 to 10:1.

9. A method in accordance with any one of Claims 1 to 8 characterised in that the high molecular weight liquid polyol comprises a polyether triol having a number average molecular weight of from 1000 to 10,000.

10. A method in accordance with any one of Claims 1 to 9 characterised in that at least 90% by weight of the diol is removed from the liquid admixture.

11. A flexible polyurethane formed from a polyol and a polyisocyanate characterised in that the polyol is obtained by a method according to any one of Claims 1 to 10.

## Patentansprüche

1. Verfahren zur thermischen Behandlung von Polyurthan zwecks Rückgewinnung von flüssigem Polyolprodukt daraus, bei dem das Polyurethan bei einer Temperatur bis zu 210°C in einem niedermolekularen Diol aufgelöst wird, dadurch gekennzeichnet, dass man während der Auflösung oder danach dem Polyurethan ein flüssiges, zur Verwendung bei der Herstellung von Polyurethanweichschaum geeignetes Polyol mit einem zahlenmittleren Molekulargewicht von mindestens 1000 beimischt und mindestens teilweise das niedermolekulare Diol im Vakuum bei einer Temperatur über 100°C unter Hinterlassung eines flüssigen Polyolrückstands aus dem flüssigen Gemisch entfernt.

2. Verfahren nach Anspruch 1, dadurch gekennzeichnet, dass das hochmolekulare flüssige Polyol aus einem Polyäthertriol besteht.

3. Verfahren nach Anspruch 1 oder 2, da-durch gekennzeichnet, dass das Gewichts-verhältnis des besagten Diols zum Polyurethan 1:1 bis 1:2 beträgt.

4. Verfahren nach einem der Ansprüche 1 bis 3, dadurch gekennzeichnet, dass das Gewichtsverhältnis des hochmolekularen flüssigen Polyols zum Polyurethan 10:1 bis 1:1 beträgt.

5. Verfahren nach einem der Ansprüche 1 bis 4, worin mindestens 70 Gew.-% des Diols aus dem flüssigen Gemisch entfernt werden.

6. Verfahren nach einem der Ansprüche 1 bis 5, dadurch gekennzeichnet, dass die Moleküle des Diols eine durch Sauerstoff unterbrochene Alkylenkette mit bis zu 6 Kohlenstoffatomen enthalten.

7. Verfahren nach Anspruch 6, dadurch gekennzeichnet, dass das Diol aus Diäthylenglykol oder Dipropylenglykol besteht.

8. Verfahren nach einem der Ansprüche 1 bis 7, dadurch gekennzeichnet, dass das Gewichtsverhältnis des durch Auflösen des Polyurethans in dem Diol erhaltenen Produkts und des hochmolekularen flüssigen Polyols 1:20 bis 10:1 beträgt.

9. Verfahren nach einem der Ansprüche 1 bis 8, dadurch gekennzeichnet, dass das hochmolekulare flüssige Polyol aus einem Poly-äthertriol mit einem zahlenmittleren Molekular-gewicht von 1 000 bis 10 000 besteht.

10. Verfahren nach einem der Ansprüche 1 bis 9, dadurch gekennzeichnet, dass mindestens 90 Gew.-% des Diols aus dem flüssigen Gemisch entfernt werden.

11. Aus einem Polyol und einem Poly-isocyanat gebildetes Weichpolyurethan, da-durch gekennzeichnet, dass das Polyol gemäss einem Verfahren nach einem der Ansprüche 1 bis 10 erhalten wurde.

## Revendications

1. Procédé de traitement thermique d'un polyuréthane en vue de recueillir un polyol liquide à partir de celui-ci, qui comprend la dissolution du polyuréthane dans un diol de bas poids moléculaire à une température s'élevant jusqu'à 210°C, caractérisé en ce que pendant ou après la dissolution, on mélange avec le polyuréthane un polyol liquide qui a un poids moléculaire moyen en nombre d'au moins 1,000 et qui se prête à la préparation d'une mousse de polyuréthane flexible et on sépare au moins une partie du diol de bas poids moléculaire sous vide du mélange liquide à une température excédant 100°C pour laisser subsister un résidu de polyol liquide.

2. Procédé suivant la revendication 1, caractérisé en ce que le polyol liquide de haut poids moléculaire comprend un polyéther-triol.

3. Procédé suivant la revendication 1 ou 2, caractérisé en ce que le rapport pondéral du diol au polyuréthane est de 1:1 à 1:2.

4. Procédé suivant l'une quelconque des revendications 1 à 3, caractérisé en ce que le rapport pondéral du polyol liquide de haut poids moléculaire au polyuréthane est de 10:1 à 1:1.

5. Procédé suivant l'une quelconque des revendications 1 à 4, caractérisé en ce qu'au moins 70% en poids du diol sont séparés du mélange liquide.

6. Procédé suivant l'une quelconque des revendications 1 à 5, caractérisé en ce que les molécules du diol comprennent une chaîne alcoylène interrompue par de l'oxygène et comptant jusqu'à 6 atomes de carbone.

7. Procédé suivant la revendication 6, caractérisé en ce que le diol comprend du diéthylène-glycol ou du dipropylèneglycol.

8. Procédé suivant l'une quelconque des revendications 1 à 7, caractérisé que le rapport pondéral du produit obtenu par dissolution du polyuréthane dans le diol au polyol liquide de haut poids moléculaire est de 1:20 à 10:1.

9. Procédé suivant l'une quelconque des revendications 1 à 8, caractérisé en ce que le polyol liquide de haut poids moléculaire comprend un polyéther-triol ayant un poids moléculaire moyen en nombre 1.000 à 10.000.

10. Procédé suivant l'une quelconque des revendications 1 à 9, caractérisé en ce qu'au moins 90% en poids du diol sont séparés du mélange liquide.

11. Polyuréthane flexible préparé à partir d'un polyol et d'un polyisocyanate, caractérisé en ce que le polyol est obtenu par un procédé suivant l'une quelconque des revendications 1 à 10.